# EUROPÄISCHE PATENTSCHRIFT

(11) **EP 1 180 183 B1**
(45) Veröffentlichungstag und Bekanntmachung des Hinweises auf die Patenterteilung: **28.02.2007**
(21) Anmeldenummer: 00938647.5
(22) Anmeldetag: 17.05.2000
(51) Int. Cl.: E04B 1/80

(54) **WÄRMEDÄMMENDES PANEEL FÜR FENSTER, TÜREN UND FASSADEN**
HEAT INSULATING PANEL FOR WINDOWS, DOORS AND FA ADES
PANNEAU THERMO-ISOLANT POUR FENETRES, PORTES ET FA ADES

(30) Priorität: 20.05.1999 DE 19923057
(43) Veröffentlichungstag der Anmeldung: 20.02.2002
(73) Patentinhaber: SCHÜCO International KG, 33609 Bielefeld (DE)
(72) Erfinder: BIELEFELD, Hans-Walter, D-33719 Bielefeld (DE); KORDISCH, Thomas, D-33739 Bielefeld (DE)
(74) Vertreter: Specht, Peter
(86) Internationale Anmeldenummer: PCT/EP2000/004471
(87) Internationale Veröffentlichungsnummer: WO 2000/071826

(56) Entgegenhaltungen:
- EP-A- 0 463 311
- EP-A- 0 862 032
- DE-A- 2 607 287
- DE-A- 3 824 129
- DE-A- 4 339 435
- DE-U- 29 823 140

## Beschreibung

Die Erfindung bezieht sich auf ein wärmedämmendes Paneel für Fenster, Türen und Fassaden nach dem Oberbegriff des Anspruchs 1.

Ein gattungsgemäßes Paneel ist aus der DE 4339435 A bekannt, die auf die DE-3347619 A verweist, welche ein Verfahren zur Herstellung plattenförmiger Formkörper beschreibt, die in der DE 4339435 A übernommen werden.

Es ist auch ein wärmedämmendes Paneel bekannt (*Ergebnisse aus Forschung und Entwicklung, Tätigkeitsbericht 1997 vom 31.12.1997 des ZAE Bayern, Seiten 32 und 33),* bei dem zwischen zwei Glasplat-ten eine gepreßte Pulverplatte angeordnet wird (Abb. 2.2.10). Die gepreßte Pulverplatte wird im Randbereich zwischen den Glasscheiben umlaufend mit einer gasdichten Folie versehen, die mittels Kleb- und Dichtstoff an der Innenseite des Scheibenrandes festgelegt wird. Anschließend wird der Scheibenrand umlaufend mit einer dauerelastischen Masse versiegelt.

Aus der Abbildung 2.2.9 dieser Literaturstelle ist zu entnehmen, daß zur Herstellung der gepreßten Pulverplatte ein besonderes Verfahren erforderlich ist, bei dem loses Pulver zwischen zwei in Abstand voneinander angeordneten Geweben und einer umlaufenden Schaumschicht angeordnet und unter Druck- und Temperatur zu der Preßplatte geformt wird. Diese Preßplatte wird zwischen den Scheiben eingebracht, zwischen denen dann ein Vakuum erzeugt wird. Anschließend wird die umlaufende Randversiegelung vorgenommen.

Beim Einsatz derartiger Paneele im Hochbau werden die Paneele wechselnden Druck- und Soglasten ausgesetzt, die sich besonders nachteilig auf den versiegelten Randbereich auswirken können. Ferner wirkt auf die große Versiegelungsfläclie eine Dampfdiffusion, durch die die Lebensdauer des Paneels herabgesetzt wird.

Der Erfindung liegt die Aufgabe zugrunde, ein wärmedämmendes Paneel der eingangs genannten Art so zu gestalten, daß eine besonders gute Warmedämmung erreicht wird.

Diese Aufgabe wird erfindungsgemäß durch den Gegenstand des Anspruchs 1.

Da beim Paneel eine Trennung zwischen dem den Dämmstoff enthaltenden evakuierten Raum und dem Innenraum des Paneels besteht, werden die Innenseiten der Außenplatten des Paneels nicht dem Vakuum ausgesetzt. Hierdurch ist eine Formstabilität der Außenplatten gegeben, die nur den wechselnden Druck- und Sogbelastungen der Atmosphäre ausgesetzt sind. Durch die Außenplatten und durch den umlaufenden Randverbund werden diese wechselnden Druck- und Soglasten von der Dämmeinheit ferngehalten.

Auf die Schweißnaht oder auf die Schweißnähte der metallkaschierten Folie der Dämmeinheit wirken somit nur Dampfdiffusionen, die im Paneeleinnenraum entstehen.

Da die für den Randverbund erforderlichen Bauteile in sehr engen Toleranzen vorgefertigt werden können, kann die Paneeldicke ebenfalls in sehr engen Toleranzgrenzen hergestellt werden, was eine erhebliche Erleichterung bei der Montage solcher Paneelelemente mit sich bringt.

Die Dämmeinheiten können als ebene Platte, als winkelförmiger Formkörper oder als gewölbter Formkörper ausgebildet sein. Der Paneelinnenraum wird entsprechend der Raumform der Dämmeinheit gestaltet.

Der Randverbund kann als Randversiegelung mit einem dauerelastischen oder dauerplastischen Material ausgebildet sein.

Weitere Ausgestaltungen der Erfindung ergeben sich aus den Unteransprüchen.

Ausführungsbeispiele der erfindungsgemäßen wärmedämmenden Paneele sind in den Zeichnungen dargestellten werden im folgenden beschrieben. Es zeigen:
- Figur 1: eine Teilansicht einer Fassade im Schnitt,
- Figur 2: eine Dämmeinheit in perspektivischer Darstellung,
- Figur 3: die Dämmeinheit nach der Figur 2 im Grundriß,
- Figuren 4 bis 8: verschiedene Ausführungen des Paneels mit eingesetzter Dämmeinheit im Schnitt,
- Figuren 9 bis 11: weitere Ausführungsformen des Paneels.

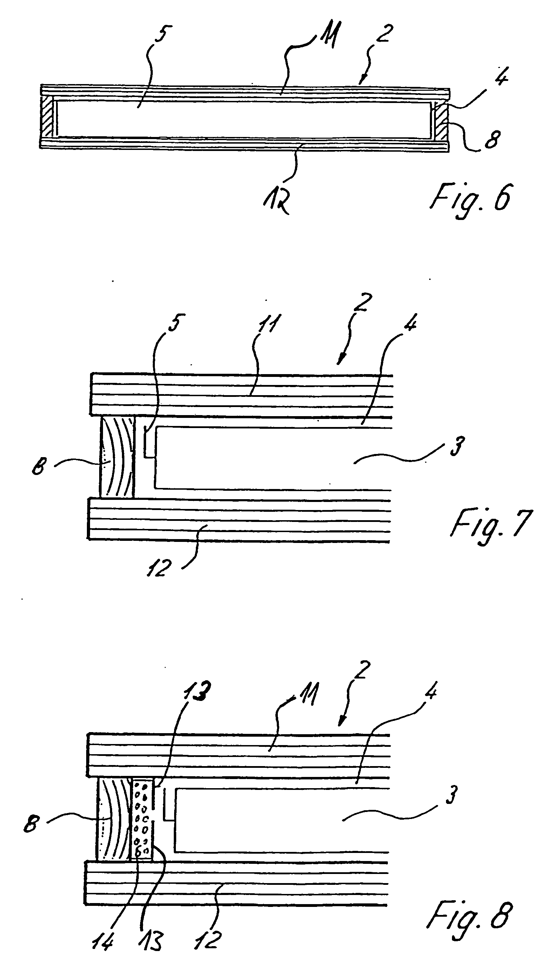

Die Fig. 6-9 zeigen keine Ausführungsbeispiele der Erfindung.

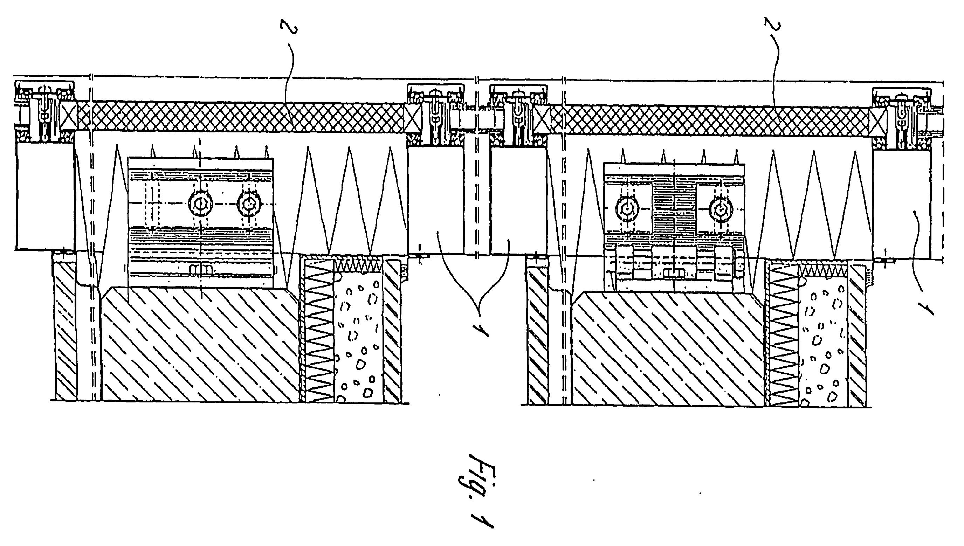

Die Figur 1 zeigt im Vertikalschnitt eine Fassade, bei der zwischen den horizontalen Riegelprofilen 1 und den senkrecht verlaufenden, nicht dargestellten Pfostenprofilen wärmegedämmte Paneele 2, vorzugsweise in Brüstungsbereichen eingesetzt sind.

Das Rahmenwerk aus Riegel- und Pfostenprofilen läßt, wie am Riegelprofil 1 zu erkennen ist, nur eine durch die Konstruktion vorgegebene maximale Paneeldicke zu. Reicht die geforderte Wärmedämmung durch das Paneel 2 nicht aus, so ist ggf. eine zusätzliche Wärmedämmung im Anschluß daran vorzusehen.
Die Vakuumisolationstechnik bietet jedoch die Möglichkeit, mit geringen Paneeldicken eine intensive Wärmedämmung zu erreichen.

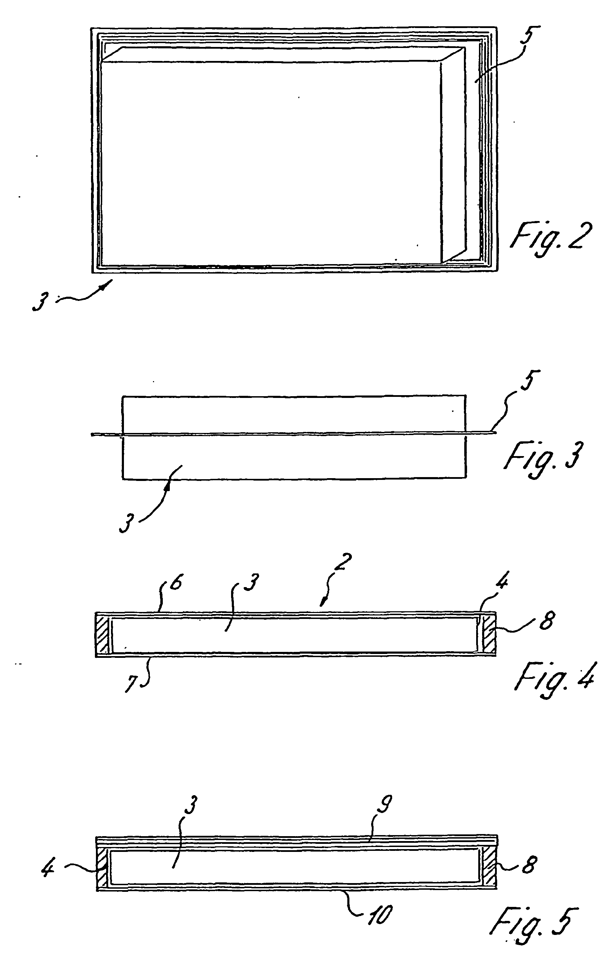

In den Figuren 2 und 3 ist eine Dämmeinheit 3 dargestellt, die im Paneelinnenraum 4 angeordnet wird.

Die Dämmeinheit 3 enthält einen z.B. aus Kieselsäure bestehenden, vorgepreßten Dämmstoff oder einen auf Maß geformten Schaumkörper z.B. aus Polyurethan. Auch feinkörnige Styropore können als Dämmstoff verwendet werden.

Dieser Dämmstoff wird durch eine dampfdiffusionsdichte, mit einer Metallkaschierung versehene Folie umschlossen, wobei der Folieninnenraum vor dem Zuschweißen evakuiert wird.

Als Metallkaschierung kann Aluminium als Beschichtung oder als Folie verwendet werden.

Zur Umhüllung des Dämmstoffes können zwei getrennte Folienbahnen verwendet werden, die um die Kanten des Dämmstoffkörpers herum dicht schließend verschweißt werden. Vor dem Verschweißen der letzten Kante wird aus dem entstandenen Folieninnenraum die Luft evakuiert, so daß sich die Folie eng an den Dämmstoff anschmiegt. Nach dem Erreichen des gewünschten Unterdruckes wird auch die letzte Begrenzungskante dichtgeschweißt.

Zur Erstellung der Hülle der Dämmeinheit 3 können auch Folienschläuche eingesetzt werden, bei denen lediglich die beiden gegenüberliegenden offenen Seiten des Schlauches zu verschweißen sind. Mit entsprechenden Schweißspiegeln wird mit dem Verschließen des Schlauches gleichzeitig die Öffnung des nächsten Schlauches mitverschlossen und die Schweißnaht mittig so getrennt, daß ein einseitig geschlossener Schlauch für die nächste Dämmeinheit 3 zur Verfügung steht.

Als Folienmaterial werden verschweißbare Folien auf Thermoplastbasis eingesetzt, die zur Steigerung bzw. zur Erzielung der Dampfdiffusionsdichtigkeit mit einem Metall, vorzugsweise mit Aluminium kaschiert ist.
Eine Dampfdiffusion zwischen dem unter Vakuum stehenden Innenraum der Dämmeinheit und der Umgebung findet somit lediglich in äußerst geringem Maße im Bereich der Schweißfuge statt:

Es ist somit vorteilhaft, für die Erstellung der Folienhülle für die Dämmeinheit Schlauchfolien zu verwenden, da dadurch die Gesamtlänge der Schweißnähte gering wird.

Aus der Fig. 3 ergibt sich, daß der Schweißrand 5 im wesentlichen mittig an der plattenförmigen Dämmeinheit ausgebildet ist. Dieser umlaufende Schweißrand 5, der die doppelte Foliendicke aufweist, kann beim späteren Einsatz der Dämmeinheit in einfacher Weise an den plattenförmigen Körper angefaltet werden.

Eine oder mehrere der Dämmeinheiten 3 werden im Innenraum 4 eines Paneels 2 angeordnet.

Das in der Figur 4 im Schnitt dargestellte Paneel 2 weist Außenplatten 6,7 auf, die aus Blechen gefertigt sind.

Der umlaufende Rand 8 des Paneels wird durch einen Randverbund z.B. eine Versiegelungsmasse gebildet, die den Innenraum 4 des Paneels luftdicht verschließt.

Die im Innenraum 4 des Paneels angeordnete Dämmeinheit 3 oder die dort vorgesehenen Dämmeinheiten 3 liegen lose im Innenraum und sind also weder mit den Außenplatten 6,7 noch mit dem umlaufenden Rand 8 verbunden. Im Innenraum 4 ist Atmosphärendruck vorhanden. Dieser Druck bleibt unbeeinflußt von den Druck- und Sogbelastungen, denen das Paneel als Fassadenelement ausgesetzt ist.

Die Außenplatten können aus einem beliebigen Plattenmaterial, wie z.B. Kunststoff, Keramik, Steinwerk oder kunststoffkaschiertem Holz, bestehen.

Bei dem Ausführungsbeispiel nach der Fig. 5 weist das Paneel an der Oberseite eine Glasplatte 9 und an der Unterseite eine Blechplatte 10 auf. Die Glasplatte 9 kann aus ESG oder VSG bestehen und entsprechend einem architektonischen Wunsch eingefärbt bzw. farbig bedampft sein. Auch weitere Gestaltungsmöglichkeiten stehen zur Verfügung.
Bei Fig. 6 sind die Außenplatten als Glasplatten 11, 12 ausgebildet.

Die Figur 7 zeigt den Randbereich eines Paneels 2 nach der Fig. 6. Aus dieser Darstellung ist erkennbar, daß der mit einer Schweißnaht versehene Rand 5 der Folienhülle der Dämmeinheit 3 an den plattenförmigen Körper der Dämmeinheit gefaltet ist. Die Dämmeinheit 3 ist so bemessen, daß sie umlaufend einen Raum zu den Scheibenkanten freiläßt, indem eine ausreichend stabilisierende Versiegelung vorgenommen werden kann. Die Dämmeinheit 3 dient gleichzeitig als Begrenzung für die Versiegelung.

In der Fig. 8 ist ein Paneel 2 darstellt, bei dem die Glasscheiben 11, 12 durch ein Abstandsprofil 13 auf Distanz gehalten werden. Die Dämmeinheit 3 liegt lediglich schließend im Paneelinnenraum 4. Das Abstandsprofil 13 bildet ein Widerlager für die umlaufende Versiegelungsfuge und kann in weiterer Ausbildung als Aufnahmeraum 14 für ein Trockenmittel genutzt werden.

Um die Wärmedämmung im Randbereich nicht zu verschlechtern, ist das Abstandsprofil 13 aus Kunststoff gefertigt und mit dünnen Wänden ausgestattet.

Das Trockenmittel im Aufnahmeraum 14 nimmt eindiffundierenden Wasserdampf auf und hält den Paneelinnenraum 4 langfristig wasserfrei.

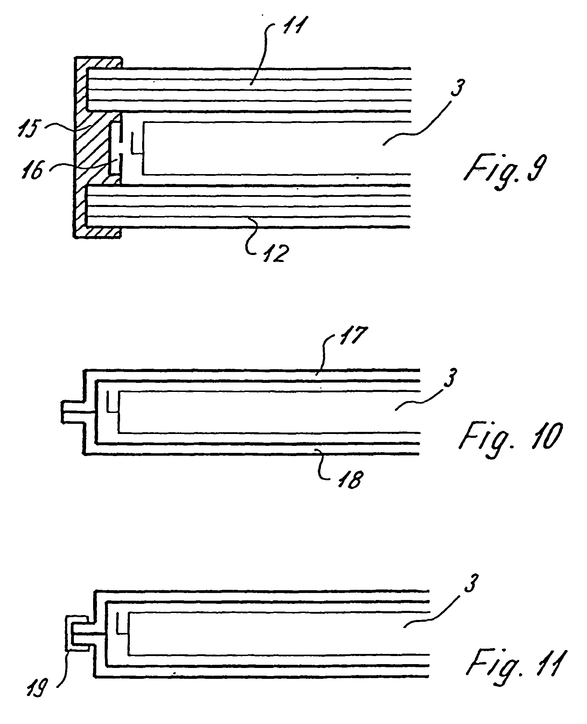

Die Figur 9 zeigt einen Paneelaufbau aus zwei Außenplatten 11 und 12, zwischen denen die Dämmeinheit 3 vorgesehen ist. Der Randverbund wird durch ein umlaufendes Kunststoffprofil 15 gebildet, das mit den Außenplatten 11,12 dichtend verklebt ist.
Das Kunststoffprofil 15 kann zum Paneelzwischenraum eine Aufnahmenut 16 für ein Entwässerungsmittel aufweisen, um Feuchtigkeit dem Paneelzwischenraum zu entziehen bzw. eindiffundierte Feuchtigkeit aufzunehmen.
Das Kunststoffprofil 15 kann, wie dargestellt, die Außenplatten 11,12 umgreifen und einfassen. Es ist aber ausreichend, wenn das Kunststoffprofil lediglich den Abstand zwischen den Außenplatten 11,12 überbrückt.

Die Figur 10 zeigt ein Paneel, bei dem die Außenplatten 17,18 umlaufend so geformt sind, daß die Ränder eine umlaufende Anlage bilden, die den Abstand der Außenplatten zur Aufnahme der Dämmeinheit 3 bestimmt.

Bei Metallplatten können diese Ränder durch Tiefziehen oder Kanten erzeugt werden. Die Verbindung der Außenplatten erfolgt durch Kleben, Löten oder Schweißen, oder, wie in Figur 11 dargestellt, durch mechanisches Bördeln unter Zwischenschaltung von Dichtungsmaterial.

Bei derartigen, aus Glas gefertigten Außenplatten findet eine umlaufende Randverschmelzung zur Abdichtung der Paneeleinheit statt.
Bei Platten aus Kunststoff kann der Rand ebenfalls durch Tiefziehen hergestellt werden. Die Verbindung erfolgt dann durch Kleben oder bei Thermoplasten durch Verschweißen des Randes.

Die Figur 11 zeigt die Möglichkeit der mechanischen Verbindung von Metallplatten. Zu diesem Zweck ist auf den Rand der Außenplatten ein U-förmiges Profil 19 aufgesetzt, welches durch Vorspannung den Dichtdruck auf die Dichtflächen ausübt. Das Profil 19 kann aber auch durch Walzumformung angebördelt werden, wobei der Bördelrand auch an einer der Außenplatten bereits einstückig vorgesehen werden kann anstelle des separaten Profiles 19.
Aus den erörterten Ausführungsbeispielen ergibt sich, daß die Paneeldicke nicht durch die Dämmeinheit 3 sondern durch den Randverbund festgelegt wird.

Die Dämmeinheit 3 bzw. die Dämmeinheiten werden mit den Innenflächen der Außenplatten nicht verbunden bzw. nicht flächig verbunden.
Für den Fertigungsablauf kann es sinnvoll sein, die Dämmeinheit bzw. die Dämmeinheiten an einer der Außenplatten punktweise zu fixieren und zwar mittels eines adhäsiven Mittels wie z.B. mittels eines Klebers. Die Fixierung dient allein der einwandfreien Montage der Dämmeinheit in bezug auf den Randverbund.

### Bezugszeichenliste

- 1: Riegelprofil
- 2: Paneel
- 3: Dämmeinheit
- 4: Paneelinnenraum
- 5: Rand
- 6: Außenplatte
- 7: Außenplatte
- 8: Rand
- 9: Glasplatte
- 10: Blechplatte
- 11: Glasplatte
- 12: Glasplatte
- 13: Abstandsprofil
- 14: Aufnahmeraum
- 15: Kunststoffprofil
- 16: Aufnahmenut
- 17: Außenplatte
- 18: Außenplatte
- 19: Profil

## Patentansprüche

1. Wärmedämmendes Paneel für Fenster, Türen und Fassaden mit einer im Paneelinnenraum vorgesehenen Dämmeinheit (3), in der ein Dämmstoff von einer Folie umschlossen und der Folieninnenraum vor dem Zuschweißen evakuiert ist, wobei die Dämmeinheit (3) in dem Paneelinnenraum (4) angeordnet ist, welcher durch zwei Außenplatten und einen Randverbund (8) begrenzt ist, wobei die Dämmeinheit (3) mit den Platteninnenflächen nicht verbunden ist, **dadurch gekennzeichnet dass**
- der Randverbund (8) eine Versiegelung und ein zwischen den Außenplatten angeordnetes Abstandsprofil (13) umfaßt,
- wobei das Abstandsprofil (13) ein Widerlager für die umlaufende Versiegelung bildet
- die Folie eine Metallkaschierung aufweist, und
- das Paneel entweder an seiner Oberseite eine Glasplatte (9) und an seiner Unterseite eine Blechplatte (10) oder an seiner Oberseite und an seiner Unterseite eine Blechplatte (10) aufweist.

2. Wärmedämmendes Paneel nach Anspruch 1, **dadurch gekennzeichnet, daß** die Dämmeinheit (3) als ebene Platte, als winkelförmiger Formkörper oder als gewölbter Formkörper ausgebildet und der Paneelinnenraum (4) entsprechend gestaltet ist.

3. Wärmedämmendes Paneel nach Anspruch 1, **dadurch gekennzeichnet, daß** der Dämmstoff aus Kieselsäure, Polyurethan oder feinkörnigen Styroporen besteht.

4. Wärmedämmendes Paneel nach Anspruch 1, **dadurch gekennzeichnet, daß** als Metallkaschierung eine Aluminiumbeschichtung verwendet wird.

5. Wärmedämmendes Paneel nach Anspruch 1, **dadurch gekennzeichnet, daß** die Folienhülle der Dämmeinheit (3) aus einer Schlauchfolie gefertigt ist.

6. Wärmedämmendes Paneel nach einem der vorstehenden Ansprüche, **dadurch gekennzeichnet, daß** das Abstandsprofil (13) einen Aufnahmeraum (14) für ein Trockenmittel aufweist.

7. Wärmedämmendes Paneel nach einem der vorstehenden Ansprüche, **dadurch gekennzeichnet, daß** das Abstandsprofil (13) dünnwandig ausgebildet ist und aus Kunststoff besteht.

8. Wärmedämmendes Paneel nach Anspruch 1, **dadurch gekennzeichnet, daß** der Randverbund als umlaufende Randversiegelung mit einem dauerplastischen oder dauerelastischen Material ausgebildet ist.

9. Wärmedämmendes Paneel nach Anspruch 1, **dadurch gekennzeichnet, daß** die Dämmeinheit (3) oder die Dämmeinheiten mit einer der Außenplatten punktweise mittels eines adhäsiven Mittels verbunden ist bzw. sind.

## Claims

1. Heat-insulating panel for windows, doors and façades, comprising an insulating unit (3) which is provided in the interior of the panel and in which an insulating material is enclosed by a film and the interior of the film is evacuated prior to the film being closed by welding, the insulating unit (3) being arranged in the panel interior (4), which is bounded by two outer plates and an edge connection (8), the insulating unit (3) not being connected to the inner faces of the plates, **characterized in that**
- the edge connection (8) comprises a seal and a spacer profile (13) arranged between the outer plates,
- wherein the spacer profile (13) forms an abutment for the peripheral seal,
- the film has a metal covering, and
- the panel either has a glass plate (9) on its upper side and a sheet-metal plate (10) on its lower side or a sheet-metal plate (10) on its upper side and on its lower side.

2. Heat-insulating panel according to Claim 1, **characterized in that** the insulating unit (3) is formed as a flat plate, as an angular moulding or as a curved moulding, and the panel interior (4) is designed correspondingly.

3. Heat-insulating panel according to Claim 1, **characterized in that** the insulating material consists of silica, polyurethane or fine-grained styrofoams.

4. Heat-insulating panel according to Claim 1, **characterized in that** an aluminium coating is used as the metal covering.

5. Heat-insulating panel according to Claim 1, **characterized in that** the film casing of the insulating unit (3) is produced from a tubular film.

6. Heat-insulating panel according to one of the preceding claims, **characterized in that** the spacer profile (13) has a receiving space (14) for a desiccant.

7. Heat-insulating panel according to one of the preceding claims, **characterized in that** the spacer profile (13) is of thin-wall design and is made of plastic.

8. Heat-insulating panel according to Claim 1, **characterized in that** the edge connection is formed as a peripheral edge seal comprising a permanently plastic or permanently elastic material.

9. Heat-insulating panel according to Claim 1, **characterized in that** the insulating unit (3) or the insulating units is or are connected at certain points to one of the outer plates by means of an adhesive agent.

## Revendications

1. Panneau thermo-isolant pour fenêtres, portes et façades comportant une unité d'isolation (3), prévue à l'intérieur du panneau, dans laquelle un matériau isolant est enveloppé d'une pellicule et du vide est fait à l'intérieur de la pellicule avant la fermeture par soudage, l'unité d'isolation (3) étant disposée dans l'espace intérieur (4) du panneau, qui est délimité par deux plaques extérieures et par une interconnexion de bords (8), l'unité d'isolation (3) n'étant pas reliée aux surfaces intérieures des plaques, **caractérisé en ce que**
- l'interconnexion de bords (8) comprend une étanchéisation et un profilé d'écartement (13) disposé entre les plaques extérieures,
- le profilé d'écartement (13) constituant une butée pour l'étanchéisation circonférentielle
- la pellicule présentant un revêtement métallique et
- le panneau présentant soit une plaque de verre (9) sur sa surface supérieure et une plaque de tôle (10) sur sa surface inférieure, soit une plaque de tôle (10) sur sa surface supérieure et sur sa surface inférieure.

2. Panneau thermo-isolant selon la revendication 1, **caractérisé en ce que** l'unité d'isolation (3) est conformée en plaque plane, en corps profilé angulaire ou en corps profilé cintré et **en ce que** l'espace intérieur (4) du panneau est conformé de façon correspondante.

3. Panneau thermo-isolant selon la revendication 1, **caractérisé en ce que** le matériau isolant est constitué d'acide silicique, de polyuréthane ou de polystyrène expansé de fine granulométrie.

4. Panneau thermo-isolant selon la revendication 1, **caractérisé en ce qu'**un revêtement aluminium est utilisé comme revêtement métallique.

5. Panneau thermo-isolant selon la revendication 1, **caractérisé en ce que** la pellicule formant enveloppe de l'unité d'isolation (3) est fabriquée à partir d'un film tubulaire.

6. Panneau thermo-isolant selon l'une quelconque des revendications précédentes, **caractérisé en ce que** le profilé d'écartement (13) présente un espace (14) susceptible de recevoir un agent siccatif.

7. Panneau thermo-isolant selon l'une quelconque des revendications précédentes, **caractérisé en ce que** le profilé d'écartement (13) présente de minces parois et est constitué en matière synthétique.

8. Panneau thermo-isolant selon la revendication 1, **caractérisé en ce que** l'interconnexion de bords est conformée en étanchéisation de bords circonférentielle à l'aide d'un matériau à plasticité permanente ou à élasticité permanente.

9. Panneau thermo-isolant selon la revendication 1, **caractérisé en ce que** l'unité d'isolation (3) ou les unités d'isolation est ou sont reliée(s) à l'une des plaques extérieures de façon ponctuelle, grâce à un adhésif.
